# FASCICULE DE BREVET EUROPEEN

(11) **EP 3 987 209 B1**
(45) Date de publication et mention de la délivrance du brevet: **01.01.2025**
(21) Numéro de dépôt: 20747018.8
(22) Date de dépôt: 22.06.2020
(51) Int. Cl.: F16L 33/01

(54) **CONDUITE FLEXIBLE POUR LE TRANSPORT D'UN FLUIDE EN MILIEU SOUS-MARIN ET PROCEDE D'INSPECTION ASSOCIE**
FLEXIBLES ROHR ZUM FÖRDERN EINES FLUIDS IN EINER UNTERWASSERUMGEBUNG UND ZUGEHÖRIGES INSPEKTIONSVERFAHREN
FLEXIBLE PIPE FOR TRANSPORTING A FLUID IN A SUBMARINE ENVIRONMENT AND ASSOCIATED INSPECTION METHOD

(30) Priorité: 20.06.2019 FR 1906629
(43) Date de publication de la demande: 27.04.2022
(73) Titulaire: TECHNIP N-POWER, 92400 Courbevoie (FR)
(72) Inventeur: ALVES PINTO MOSQUEIRA GOMES, Cristiano, 22461-210 Rio de Janeiro, RJ (BR); FERRAZ, Jean Paul, 22290-290 Rio de Janeiro, RJ (BR); LEITÂO GONCALVES TOSTE, Fernando, 20540-140 Rio de Janeiro, RJ (BR); RONALDO ANDRADE DOS REIS, Carlos, 22750-320 Rio de Janeiro, RJ (BR); PONTUAL, Thiago, 22240-170 Rio de Janeiro, RJ (BR); ARRUDA, Fabio Rogerio, 22793-624 Rio de Janeiro, RJ (BR); LAAF, Fred, 24220-260 Rio de Janeiro, RJ (BR); VINICIUS GAMA GOMES, Tiago, 22631-450 Rio de Janeiro, RJ (BR)
(74) Mandataire: Fédit-Loriot
(86) Numéro de dépôt international: PCT/FR2020/051083
(87) Numéro de publication internationale: WO 2020/254775

(56) Documents cités:
- EP-A1- 0 535 997
- WO-A1-2012/110637
- FR-A1- 3 016 422

## Description

### Domaine technique de l'invention

L'invention concerne le domaine technique des conduites flexibles pour le transport d'un fluide en milieu sous-marin.

Plus particulièrement, l'invention concerne les conduites flexibles non liées mises en oeuvre pour le transport d'hydrocarbures en milieu sous-marin.

### Etat de la technique

Les conduites flexibles pour le transport d'un fluide en milieu sous-marin sont immergées au sein d'une étendue d'eau à des profondeurs pouvant dépasser 3000 m. Elles trouvent notamment leur intérêt dans l'acheminement d'eau et/ou d'hydrocarbures entre une installation de fond et une installation de surface. Elles peuvent également être utilisées pour raccorder deux installations de fond. Certaines conduites flexibles peuvent par ailleurs être utilisées pour raccorder deux installations de surface.

La structure d'une conduite flexible est par exemple décrite au sein des documents normatifs API RP 17B, 5^{ieme} édition, publié en Mai 2014 et API 17J, 4^{ième} édition, publié en Mai 2014 par l'American Petroleum Institute.

Typiquement, une conduite flexible comprend une gaine interne d'étanchéité appelée dans le domaine technique de l'invention « gaine de pression ». La gaine interne d'étanchéité forme un passage interne de circulation du fluide et assure ainsi son transport de manière étanche.

D'importants efforts de traction peuvent s'exercer sur la conduite flexible notamment lorsqu'elle s'étend à travers de profondes étendues d'eau. Une paire de nappes d'armures de traction est agencée autour de la gaine interne pour reprendre ces efforts de traction. La paire de nappes d'armures de traction est typiquement composée de fils métalliques enroulés en hélice selon un pas long, c'est-à-dire que la valeur absolue de l'angle d'hélice est comprise entre 20° et 55°.

Afin de prévenir l'entrée d'eau de l'étendue d'eau au sein de la conduite flexible, cette dernière comprend généralement une gaine externe polymérique de protection agencée autour de la paire de nappes d'armures de traction. La gaine externe présente généralement une épaisseur de 10 mm.

La gaine interne et la gaine externe délimitent un espace appelé espace annulaire. La paire de nappes d'armures de traction est agencée au sein de l'espace annulaire.

Le fluide transporté est généralement composé d'hydrocarbures bruts. Ces hydrocarbures comprennent généralement un mélange de gaz tels que du dioxyde de carbone, du méthane ou encore du sulfure d'hydrogène. Le fluide transporté comprend également de l'eau et éventuellement des particules de sable.

Les gaz contenus dans le fluide transporté diffusent à travers la gaine interne et s'accumulent au sein de l'espace annulaire. L'espace annulaire comprend également de l'eau qui résulte d'une perte accidentelle d'étanchéité de la gaine externe et/ou de la diffusion et condensation d'eau contenue dans le fluide transporté à travers la gaine interne. La présence d'eau et de ces gaz au sein de l'espace annulaire engendre divers phénomènes de corrosion des fils d'armure métalliques au sein de l'espace annulaire. Les fils d'armure peuvent alors être soumis par exemple à de la corrosion sous contrainte (« Stress Corrosion Cracking, SCC » en langue anglaise).

Il est donc nécessaire de pouvoir inspecter la conduite flexible lorsqu'elle est en immergée et en service afin de détecter la présence éventuelle d'eau au sein de l'espace annulaire, ceci afin de prévenir un éventuel problème de corrosion des fils d'armure en acier.

WO2009/007670 décrit une méthode d'inspection visant à détecter la présence d'eau dans l'espace annulaire d'une conduite flexible. Cette méthode est basée sur une technique d'échographie ultrasonore. Une onde ultrasonore est envoyée dans l'espace annulaire de la conduite flexible à travers la gaine externe en utilisant un transducteur ultrasonore disposé à l'extérieur de conduite flexible et au voisinage de la gaine externe polymérique de la conduite flexible. Cette onde est partiellement réfléchie dans l'espace annulaire, notamment par les armures métalliques, l'intensité de l'onde réfléchie dépendant de la présence éventuelle d'eau dans l'espace annulaire. Le transducteur ultrasonore mesure l'onde réféchie. L'analyse de l'échogramme permet de détecter la présence éventuelle d'eau dans l'annulaire. Cette méthode d'inspection présente une fiabilité insuffisante, notamment lorsque la gaine externe de la conduite flexible est épaisse et constituée d'un matériau polymérique qui absorbe fortement les ultrasons. Le document FR3016422A1 concerne la détection de gaz dans l'annulaire.

Par conséquent, il existe un besoin de fournir une conduite flexible dont l'espace annulaire peut être inspecté lorsque la conduite est immergée et en service, de façon à pouvoir détecter avec fiabilité la présence éventuelle d'eau dans l'espace annulaire.

### Divulgation de l'invention

A cet effet, l'invention a pour objet une conduite flexible pour le transport d'un fluide pétrolier en milieu sous-marin comprenant un tronçon tubulaire flexible et deux embouts d'extrémité, chacune des deux extrémités dudit tronçon tubulaire flexible étant raccordée à un desdits deux embouts d'extrémités. Ledit tronçon tubulaire flexible comprend de l'intérieur vers l'extérieur une gaine interne polymérique pour former un passage de circulation du fluide, au moins une couche d'armures, et une gaine externe polymérique. Lesdites gaine interne et gaine externe délimitent un espace annulaire dans lequel ladite au moins une couche d'armures est agencée. Chacun desdits deux embouts d'extrémité comprend de l'intérieur vers l'extérieur une voûte d'extrémité raccordée de façon étanche à ladite gaine interne pour former un passage de circulation du fluide pétrolier, des moyens d'ancrage de ladite au moins une couche d'armures, et un capot métallique. Ledit capot est fixé à ladite voûte d'extrémité et est raccordé de façon étanche à ladite gaine externe. En outre, selon l'invention, au moins un desdits deux embouts d'extrémité comporte une cavité raccordée audit espace annulaire par des moyens de communication, lesdits moyens de communication étant aptes à faire circuler de l'eau depuis ledit espace annulaire vers ladite cavité, ledit capot formant la paroi extérieure de ladite cavité, de sorte qu'il est possible de détecter la présence d'eau dans ledit espace annulaire en inspectant ladite cavité avec un transducteur ultrasonore disposé à l'extérieur dudit capot au droit de ladite cavité

Ainsi, l'invention est caractérisée d'une part par l'ajout dans au moins un des deux embouts d'extrémité d'une cavité communiquant avec l'espace annulaire de la conduite flexible, et d'autre part par le fait que cette cavité est disposée juste en dessous du capot métallique de l'embout d'extrémité. Cette cavité est initialement remplie d'air lorsque l'espace annulaire est sec. Si l'espace annulaire s'inonde lorsque la conduite est en service, alors la cavité se remplit d'eau et il est donc possible de détecter indirectement la présence d'eau dans l'espace annulaire en détectant la présence d'eau dans la cavité. De plus, le capot de l'embout étant métallique, il peut facilement être traversé par une onde ultrasonore, avec une très faible atténuation, et il est donc possible de faire une détection fiable de la présence d'eau dans la cavité en utilisant une méthode d'échographie ultrasonore opérer à partir de la face externe du capot au droit de la cavité. En outre, le fait que la paroi extérieure de la cavité soit le capot de l'embout simplifie la structure de l'embout et réduit donc son coût, en évitant l'ajout de pièces supplémentaires, notamment en évitant l'ajout d'un couvercle étanche distinct du capot dans le but d'isoler la cavité de l'embout de l'espace extérieur. Selon la présente invention, c'est le capot métallique de l'embout qui a pour fonction d'isoler de manière étanche la cavité de l'espace extérieur, ce qui permet non seulement de simplifier la structure de l'embout, mais aussi d'obtenir une paroi extérieure de cavité très résistante et parfaitement étanche. Il est indispensable que la paroi extérieure de la cavité soit parfaitement étanche, car une perte d'étanchéité de la paroi extérieure de la cavité provoquerait une inondation de la cavité par de l'eau de mer, et cette eau de mer irait ensuite inonder l'espace annulaire du tronçon tubulaire flexible en s'écoulant le long des moyens de communication. L'utilisation du capot de l'embout en tant que paroi extérieure de la cavité permet d'obtenir une solution simple, robuste et fiable.

Préférentiellement, ladite cavité est située à l'avant desdits moyens d'ancrage. Par coté avant, on entend le coté le plus éloigné du tronçon tubulaire flexible auquel est raccordé l'embout d'extrémité considéré. Ainsi la cavité peut être intégrée à l'embout sans avoir besoin d'augmenter le diamètre extérieur de l'embout.

Il serait aussi possible de disposer la cavité entre les moyens d'ancrage et le capot ou encore du coté arrière des moyens d'ancrage. Par coté arrière, on entend le coté le plus rapproché du tronçon tubulaire flexible auquel est raccordé l'embout d'extrémité considéré.

En outre, avantageusement, ledit capot a une épaisseur constante au droit de ladite cavité. Dans ce cas, préférentiellement, l'épaisseur dudit capot au droit de ladite cavité est comprise entre 10 mm et 60 mm. Ainsi le capot est à la fois très résistant mécaniquement, parfaitement étanche, et facile à traverser par l'onde ultrasonore lors de l'inspection de la conduite flexible.

De plus, avantageusement, ladite cavité présente un volume compris entre 0,1 et 10 litres, préférentiellement compris entre 1 et 10 litres. Ainsi, la fiabilité de l'inspection est améliorée car le risque de confondre une inondation avec des traces d'humidité est supprimé du fait du volume important de la cavité et de la possibilité de limiter les alarmes aux seuls cas où la cavité est totalement remplie d'eau.

De plus, avantageusement, ladite voûte d'extrémité forme la paroi intérieure de ladite cavité. Ainsi, la conception de l'embout est simplifiée, son montage est facilité et son coût est réduit.

En outre, avantageusement, ladite cavité est axisymétrique et coaxiale par rapport à l'axe longitudinal central dudit au moins un embout d'extrémité. De plus, avantageusement, les faces interne et externe de ladite cavité sont cylindriques et coaxiales. Ceci permet notamment d'obtenir une cavité de géométrie annulaire faisant tout le tour de l'embout. Cette caractéristique facilite l'inspection ultrasonore de l'embout lorsque celui-ci est posé sur le fond marin et parfois partiellement enfoui. Ainsi quelle que soit la partie de l'embout qui dépasse du fond marin et qui est accessible pour l'application d'un transducteur ultrasonore, cette partie comporte nécessairement une partie du capot située au droit de la cavité, ce qui permet d'effectuer l'inspection ultrasonore en vue de détecter la présence d'eau dans l'espace annulaire.

Un autre avantage de cette caractéristique géométrique est qu'elle facilite l'emploi de méthodes de contrôle par échographie ultrasonore dans lesquelles l'onde ultrasonore incidente émise par le transducteur se propage selon une direction radiale par rapport à l'axe longitudinal de l'embout. Ainsi, les différentes interfaces traversées par l'onde ultrasonore incidente sont des surfaces cylindriques, notamment les faces externe et interne du capot formant la paroi extérieure de la cavité, ainsi que la face externe de la paroi intérieure de la cavité. Par suite, l'onde ultrasonore incidente se propage radialement de l'extérieur vers l'intérieur de l'embout, et les ondes ultrasonores réfléchies par les différentes interfaces se propagent radialement vers l'extérieur de l'embout en suivant le même rayon que celui suivi par l'onde incidente. Ainsi, les ondes réfléchies sont renvoyées vers le transducteur ultrasonore qui peut donc facilement détecter et mesurer les échos associés. Par suite, il est possible d'obtenir des signaux de bonne qualité, ce qui améliore la fiabilité de la détection de présence d'eau dans la cavité.

Selon une autre variante, les faces interne et externe de ladite cavité sont planes et parallèles. Cette variante permet d'employer une méthode de contrôle ultrasonore dans laquelle l'onde incidente émise par le transducteur ultrasonore se propage selon une direction perpendiculaire aux faces planes, de sorte que les ondes réfléchies par ces faces sont renvoyées selon la même direction vers le transducteur ultrasonore. Les ondes réfléchies par la cavité peuvent ainsi être facilement détectées et précisément mesurées par le transducteur, ce qui améliore la fiabilité de la détection de la présence d'eau dans la cavité.

L'invention a également pour objet un procédé d'inspection en service d'une conduite flexible pour le transport d'un fluide en milieu sous-marin, ledit procédé comprenant les étapes suivantes:
(a) fourniture et installation en milieu sous-marin d'une conduite flexible selon l'invention,
(b) application d'un transducteur ultrasonore contre ou au voisinage de la face externe du capot dudit au moins un embout d'extrémité comportant une cavité, ledit transducteur ultrasonore étant positionné de façon à pouvoir envoyer une onde ultrasonore vers ladite cavité,
(c) génération d'une onde ultrasonore incidente avec ledit transducteur ultrasonore, ladite onde se propageant à travers ledit capot jusqu'à ladite cavité,
d) réception avec ledit transducteur ultrasonore de l'onde ultrasonore renvoyée par ladite cavité et enregistrement du signal ultrasonore correspondant,
(e) analyse dudit signal ultrasonore pour déterminer si ladite cavité est remplie d'air ou d'eau, de façon à déterminer l'absence ou la présence d'eau dans l'espace annulaire de ladite conduite flexible.

Avantageusement et selon une première variante, lors de l'étape (b) ledit transducteur est en contact direct avec la face externe dudit capot au droit de ladite cavité.

Avantageusement et selon une autre variante, lors de l'étape (b) ledit transducteur n'est pas en contact direct avec la face externe dudit capot, le couplage ultrasonore entre ledit transducteur et ledit capot étant réalisé par l'eau de mer.

Avantageusement, lors de l'étape (c) l'onde ultrasonore incidente est une onde de compression qui se propage selon une direction radiale par rapport audit au moins un embout d'extrémité.

### Description des figures

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- La figure 1 représente schématiquement une vue en perspective d'un exemple de tronçon tubulaire flexible d'une conduite flexible selon l'invention,
- La figure 2 représente schématiquement une vue en coupe transversale partielle d'un embout d'extrémité d'une conduite flexible selon l'invention, et
- La figure 3 représente schématiquement une vue en coupe transversale partielle d'une étape du procédé d'inspection selon l'invention.

### Description détaillée de modes de réalisation de l'invention

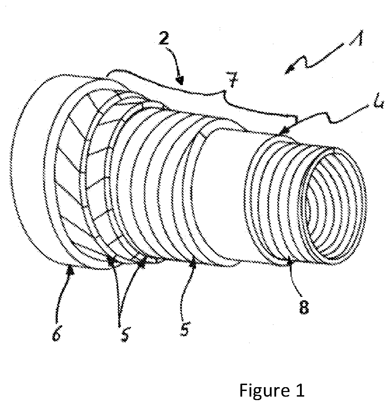

La figure 1 représente un exemple de tronçon tubulaire flexible (2) d'une conduite flexible (1) selon l'invention.

La conduite flexible (1) est destinée à être immergée au sein d'une étendue d'eau. L'étendue d'eau peut être un lac, une mer ou un océan. Généralement, la profondeur de l'étendue d'eau est au moins de 100 m, et plus particulièrement comprise entre 500 m et 3000 m.

La conduite flexible (1) achemine un fluide à travers l'étendue d'eau entre une première installation et une seconde installation. La première installation est par exemple une installation sous-marine comme une tête de puit ou un collecteur (appelé « manifold » en langue anglaise). La seconde installation est par exemple une installation de surface comme une unité flottante de production, de stockage et de déchargement (FPSO pour « Floating Production Storage and Offloading » en langue anglaise) ou une plate-forme à ancrage tendu (TLP pour « Tension Leg Plaftorm » en langue anglaise). La conduite flexible (1) assure le transport du fluide entre deux installations de surface ou entre une installation sous-marine et une installation de surface ou encore entre deux installations sous-marines.

Le fluide transporté par la conduite flexible (1) est par exemple de l'eau et/ou un fluide pétrolier et/ou gazier. Le fluide pétrolier et/ou gazier est formé d'un mélange multiphasique comprenant une partie liquide formée principalement de composés carbonés linéaires et/ou cycliques, saturés et/ou insaturés, de densité variable et d'eau, une partie gazeuse composée par exemple de méthane (CH4), de dioxyde de carbone (CO2), de sulfure d'hydrogène (H2S) et autres gaz et enfin, d'une partie solide composée généralement de particules de sable. La température du fluide au sein de la conduite flexible (1) est comprise entre 50°C et 200°C, plus particulièrement entre 50°C et 130°C. La température du fluide varie durant le transport entre la première installation et la seconde installation.

Le fluide présente par exemple une pression partielle en dioxyde de carbone comprise entre 1 bar et 300 bar et une pression partielle en sulfure d'hydrogène inférieure à 1 bar. La pression partielle de chacun des gaz au sein du fluide dépend notamment de la nature du champ pétrolifère et/ou gazier exploité.

Comme représenté à titre d'exemple sur la figure 1, le tronçon tubulaire flexible (2) de la conduite flexible (1) comprend une pluralité de couches concentriques agencées autour d'un axe longitudinal. Selon l'invention, le tronçon tubulaire flexible (2) de la conduite flexible (1) comprend une gaine interne (4) polymérique, au moins une couche d'armures (5) et une gaine externe (6) polymérique.

La conduite flexible (1) est préférentiellement une conduite flexible de type non liée. Par non liée, il est entendu au sens de la présente invention, une conduite flexible (1) dans laquelle la couche d'armures est libre de se déplacer par rapport à la gaine interne (4) lors d'une flexion de la conduite flexible (1). Préférentiellement toutes les couches de la conduite flexible (1) sont libres de se déplacer les unes par rapport aux autres. Ceci rend la conduite flexible (1) plus flexible qu'une conduite dans laquelle les couches sont liées les unes aux autres.

Préférentiellement, le tronçon tubulaire flexible (2) de la conduite flexible (1) comprend également une carcasse interne (8) agencée à l'intérieur de la gaine interne (4). La carcasse interne (8) a pour fonction de reprendre les efforts radiaux d'écrasement, notamment ceux liés à la pression hydrostatique. La carcasse interne (8) est généralement formée à partir d'un feuillard métallique profilé en forme de S et enroulé en spires agrafées les unes aux autres.

Une conduite flexible (1) comprenant une carcasse interne (8) est dite à passage non lisse (« rough bore » en anglais). Une conduite flexible (1) qui ne comporte pas une carcasse interne (8), et dans laquelle la couche la plus interne est la gaine interne (4) est dite à passage lisse (« smooth bore » en anglais). La présente invention s'applique indifféremment aux conduites flexibles à passage lisse et à passage non lisse.

La gaine interne (4) est agencée autour de la carcasse interne (8) lorsque celle-ci est présente. La gaine interne (4) forme un passage de circulation du fluide. Elle assure le transport du fluide à travers l'étendue d'eau de manière étanche. La gaine interne (4) est polymérique c'est-à-dire que plus de 50% du matériau formant la gaine interne (4) est un polymère. Le polymère est par exemple une polyoléfine telle qu'un polypropylène, un polyéthylène ou un polyamide ou encore un polymère fluoré tel qu'un polyfluorure de vinylidène (PVDF). Le matériau polymérique est choisi en fonction de la nature et de la température du fluide transporté. L'épaisseur de la gaine interne (4) est par exemple comprise entre 4 mm et 15 mm. La gaine interne (4) est réalisée par extrusion par exemple autour de la carcasse interne.

La au moins une couche d'armures (5) est destinée à renforcer la conduite flexible (1) contre les efforts de traction et de pression.

Le tronçon tubulaire flexible (2) de la conduite flexible (1) comporte avantageusement une paire croisée de nappes d'armures de traction enroulées à pas long. Par pas long, il est entendu un angle d'hélice de valeur absolue comprise entre 20° et 55°. La section des fils d'armure de traction est par exemple rectangulaire ou circulaire. Les fils d'armure de traction sont avantageusement métalliques. Le matériau métallique est par exemple un acier au carbone.

La gaine externe (6) polymérique est agencée autour de la paire de la au moins une couche d'armures (5). La gaine externe (6) est imperméable aux liquides et forme une barrière de protection contre la pénétration d'eau de l'étendue d'eau à l'intérieur du tronçon tubulaire flexible (2) de la conduite flexible (1).

La gaine externe (6) et la gaine interne (4) délimitent entre elles un espace annulaire (7). L'espace annulaire comprend selon l'exemple représenté sur la figure 1, une voûte de pression et une paire de nappes d'armures de traction (5).

La voûte de pression du tronçon tubulaire flexible (2) de la conduite flexible (1) est une couche optionnelle d'armures enroulées à pas court autour de la gaine interne (4). La voûte de pression a pour fonction d'augmenter la résistance à la pression de la conduite flexible (1). Elle est avantageusement constituée de fils métalliques en forme de Z, de T, de K, de U ou de X, dont les spires sont agrafées les unes aux autres. Par pas court, il est entendu un angle d'hélice de valeur absolue comprise entre 60° et 90°.

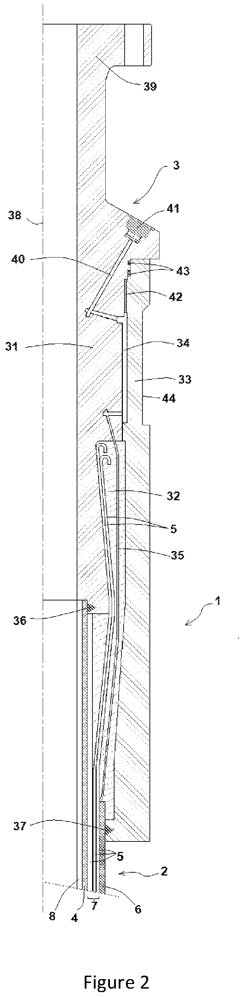

Comme représenté à la figure 2, l'embout d'extrémité (3) de la conduite flexible (1) comprend de l'intérieur vers l'extérieur une voûte d'extrémité (31) et un capot (33) fixé à la voûte d'extrémité (31). La ou les couches d'armures (5) de la conduite sont ancrées à l'embout par des moyens d'ancrage (32) qui sont généralement constitués d'une chambre remplie de résine à l'intérieur de laquelle les extrémités des fils d'armures sont bloquées, notamment lorsque les fils d'armure sont les fils d'armure de traction enroulés à pas long

La voûte d'extrémité (31) de l'embout d'extrémité (3) est une pièce sensiblement tubulaire avantageusement métallique, à l'intérieur de laquelle circule le fluide pétrolier. Elle est raccordée de façon étanche à la gaine interne (4) polymérique du tronçon tubulaire flexible (2) à l'aide des moyens internes de raccordement étanche (36), de sorte que le fluide pétrolier puisse s'écouler de l'intérieur de la voûte d'extrémité (31) vers l'intérieur du tronçon tubulaire flexible (2) en restant confiné à l'intérieur de la conduite flexible (1). Les moyens internes de raccordement étanche (36) comportent avantageusement des moyens de sertissage de la gaine interne (4).

Le capot (33) de l'embout d'extrémité (3) est une pièce sensiblement tubulaire avantageusement métallique raccordée de façon étanche à la gaine externe (6) du tronçon tubulaire flexible (2) à l'aide des moyens externes de raccordement étanche (37). Les moyens externes de raccordement étanche (37) comportent avantageusement des moyens de sertissage de la gaine externe (6).

L'extrémité avant de l'embout d'extrémité (3) comporte avantageusement une bride (39) permettant la connexion de la conduite flexible (1) avec un équipement externe.

La voûte d'extrémité (31) et le capot (33) ont avantageusement le même axe longitudinal (38) et sont sensiblement axisymétriques par rapport à l'axe longitudinal (38). L'extrémité du capot (33) qui est la plus éloignée du tronçon tubulaire flexible (2), encore appelée extrémité avant du capot, est fixé à la voûte d'extrémité (31) par des moyens de fixation comportant avantageusement un filetage (42), le capot (33) étant vissé sur la voûte d'extrémité. D'autres moyens de fixation peuvent être utilisés pour fixer le capot (33) à la voûte d'extrémité (31), par exemple des vis. Des joints toriques (43) sont disposés entre le capot (33) et la voûte d'extrémité (31) pour assurer l'étanchéité de la fixation entre le capot (33) et la voûte d'extrémité (31) et éviter notamment que de l'eau de mer puisse pénétrer à l'intérieur de l'embout d'extrémité (3) au niveau de cette fixation.

L'extrémité des nappes d'armures de traction (5) du tronçon tubulaire flexible (2) se prolonge sous le capot (33) dans la partie arrière de l'embout d'extrémité (3), et se termine entre la voûte d'extrémité (31) et le capot (33). La partie arrière de l'embout d'extrémité (3) est celle située du côté du tronçon tubulaire flexible (2) auquel est raccordé l'embout d'extrémité (3). L'embout d'extrémité (3) comporte des moyens d'ancrage (32) des nappes d'armures (5) qui consistent avantageusement en un blocage de l'extrémité de chaque fil d'armure, préalablement déformée en forme de crochet, à l'aide d'une résine thermodurcissable du type epoxy qui a été coulée à l'intérieur de la partie arrière de la paroi de l'embout d'extrémité (3).

L'embout d'extrémité (3) comporte une cavité (34) située sous le capot (33) du coté avant de l'embout d'extrémité (3). La capot (33) constitue la paroi externe de la cavité (34). La voûte d'extrémité (31) constitue la paroi interne de la cavité (34). En outre, avantageusement, la cavité (34) est axisymétrique et coaxiale par rapport à l'axe longitudinal central (38) de l'embout d'extrémité (3). L'embout d'extrémité (3) comprend des moyens de communication (35) aptes à faire circuler de l'eau depuis l'espace annulaire (7) vers la cavité (34), et qui sont avantageusement constitués d'au moins un tube reliant l'espace annulaire (7) à la cavité (34).

Lors de la fabrication et de l'installation en mer de la conduite flexible (1), la cavité (34) est remplie de gaz, avantageusement d'air sec présentant une pression sensiblement égale à la pression atmosphérique. Lorsque la conduite flexible (1) est installée en milieu sous-marin, en cas d'inondation accidentelle de l'espace annulaire (7) du tronçon tubulaire flexible (2), par exemple suite à une déchirure de la gaine externe (6) polymérique, la cavité (34) se remplit d'eau de mer via les moyens de circulation (35). Afin de faciliter le remplissage par de l'eau de la cavité (34), l'embout d'extrémité (3) comporte avantageusement des moyens d'évacuation (40) de l'air qui se présentent sous la forme d'une chambre (40) raccordée à la cavité (34) du côté opposé aux moyens de communication (35). Ainsi, lorsque de l'eau en provenance de l'espace annulaire (7) circule vers la cavité (34) le long des moyens de communication (35), l'air qui était initialement présent dans la cavité (34) peut facilement sortir de la cavité (34) en s' échappant vers les moyens d'évacuation (40), si bien que la cavité (34) peut se remplir d'eau en totalité sans que de l'air reste piégé à l'intérieur, ce qui facilite ensuite la détection d'eau à l'aide d'une transducteur ultrasonore. Les moyens d'évacuation 40 peuvent être raccordés avec l'extérieur de la conduite, par exemple via une soupape anti-retour. Ils peuvent aussi être totalement isolés de l'extérieur, par exemple via un bouchon étanche (41), mais il est dans ce cas nécessaire que le volume de la chambre (40) soit suffisant pour recevoir l'air provenant de la cavité (40).

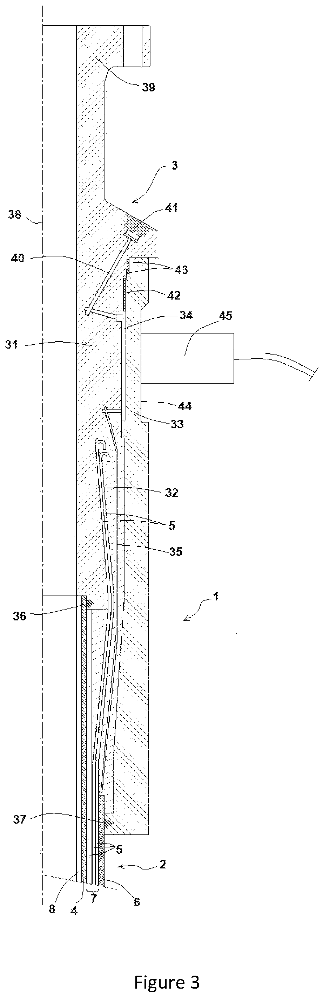

Comme représenté à la figure 3, le procédé d'inspection en service de la conduite flexible (1) comporte une étape d'application d'un transducteur ultrasonore (45) au voisinage de la face externe du capot (33) de l'embout d'extrémité (3), en face de la cavité (34). Afin de repérer précisément l'emplacement où le transducteur (45) doit être appliqué, l'embout d'extrémité comporte avantageusement une gorge externe (44) située en face de la cavité (34).

Le transducteur est opéré par un plongeur ou par un robot sous-marin télécommandé du type ROV.

La méthode de contrôle ultrasonore est avantageusement une méthode de contrôle par échographie. La fréquence du transducteur ultrasonore est avantageusement comprise entre 1 MHz et 15 MHz, préférentiellement comprise entre 5 MHz et 10 MHz. Le transducteur génère avantageusement une onde incidente de compression (onde longitudinale) qui se propage radialement vers l'intérieur de l'embout d'extrémité (3) et mesure en retour l'onde renvoyée par la cavité (34). Cette onde renvoyée comporte plusieurs ondes réfléchies par chacune des interfaces traversées par l'onde incidente, et notamment d'une part l'onde réfléchie par l'interface entre la face interne du capot (33) et la cavité (34), et d'autre part l'onde réfléchie par l'interface entre la cavité (34) et la face externe de la voûte d'extrémité (31). La première de ces deux ondes réfléchies est enregistrée par le transducteur sous la forme d'un écho d'entrée dans la cavité, alors que la deuxième est enregistrée sous la forme d'un écho de sortie.

Lorsque la cavité (34) est remplie d'air, l'onde ultrasonore incidente est réfléchie presque totalement au niveau de l'interface d'entrée dans la cavité, car les ondes ultrasonores de fréquence supérieure à 1 MHz ne se propagent quasiment pas dans l'air. Ceci génère un écho d'entrée de très forte intensité et l'absence d'écho de sortie.

Lorsque la cavité (34) est remplie d'eau, l'onde ultrasonore incidente peut se propager facilement à l'intérieure de la cavité du fait des propriété acoustiques de l'eau. Par suite, l'amplitude de l'écho d'entrée diminue fortement et de plus un écho de sortie de forte amplitude est observé. En mesurant l'amplitude des échos d'entrée et de sortie, il est ainsi possible de détecter de façon fiable la présence d'eau à l'intérieur de la cavité (34), ce qui permet de déduire la présence d'eau dans l'espace annulaire (7) du tronçon tubulaire flexible (2).

## Revendications

1. Conduite flexible (1) pour le transport d'un fluide pétrolier en milieu sous-marin comprenant un tronçon tubulaire flexible (2) et deux embouts d'extrémité (3), chacune des deux extrémités dudit tronçon tubulaire flexible (2) étant raccordée à un desdits deux embouts d'extrémités (3), ledit tronçon tubulaire flexible (2) comprenant de l'intérieur vers l'extérieur une gaine interne (4) polymérique pour former un passage de circulation du fluide, au moins une couche d'armures (5), et une gaine externe (6) polymérique, lesdites gaine interne (4) et gaine externe (6) délimitant un espace annulaire (7) dans lequel ladite au moins une couche d'armures (5) est agencée, chacun desdits deux embouts d'extrémité (3) comprenant de l'intérieur vers l'extérieur une voûte d'extrémité (31) raccordée de façon étanche à ladite gaine interne (4) pour former un passage de circulation du fluide pétrolier, des moyens d'ancrage (32) de ladite au moins une couche d'armures (5), et un capot (33) métallique, ledit capot (33) étant fixé à ladite voûte d'extrémité (31) et étant raccordé de façon étanche à ladite gaine externe (6), **caractérisée en ce qu'**au moins un desdits deux embouts d'extrémité (3) comporte une cavité (34) située à l'avant desdits moyens d'ancrage (32), et raccordée audit espace annulaire (7) par des moyens de communication (35), lesdits moyens de communication (35) étant aptes à faire circuler de l'eau depuis ledit espace annulaire (7) vers ladite cavité (34), ledit capot (33) formant la paroi extérieure de ladite cavité (34), de sorte qu'il est possible de détecter la présence d'eau dans ledit espace annulaire (7) en inspectant ladite cavité (34) avec un transducteur ultrasonore disposé à l'extérieur dudit capot (33) au droit de ladite cavité (34).

2. Conduite flexible selon la revendication 1 **caractérisée en ce que** ledit capot (33) a une épaisseur constante au droit de ladite cavité (34).

3. Conduite flexible selon la revendication 2 **caractérisée en ce que** l'épaisseur dudit capot (33) au droit de ladite cavité (34) est comprise entre 10 mm et 60 mm

4. Conduite flexible selon l'une quelconque des revendications 1 à 3 **caractérisée en ce que** ladite cavité (34) présente un volume compris entre 0,1 et 10 litres.

5. Conduite flexible selon l'une quelconque des revendications 1 à 4 **caractérisée en ce que** ladite voûte d'extrémité (31) forme la paroi intérieure de ladite cavité (34).

6. Conduite flexible selon l'une quelconque des revendications 1 à 5 **caractérisée en ce que** ladite cavité (34) est axisymétrique et coaxiale par rapport à l'axe longitudinal central dudit au moins un embout d'extrémité (3).

7. Conduite flexible selon la revendication 6 **caractérisée en ce que** les faces interne et externe de ladite cavité (34) sont cylindriques et coaxiales.

8. Conduite flexible selon l'une quelconque des revendications 1 à 7 **caractérisée en ce que** les faces interne et externe de ladite cavité (34) sont planes et parallèles.

9. Procédé d'inspection en service d'une conduite flexible (1) pour le transport d'un fluide en milieu sous-marin, ledit procédé comprenant les étapes suivantes :
(a) fourniture et installation en milieu sous-marin d'une conduite flexible (1) selon l'une quelconque des revendications 1 à 8,
(b) application d'un transducteur ultrasonore contre ou au voisinage de la face externe du capot (33) dudit au moins un embout d'extrémité (3) comportant une cavité (34), ledit transducteur ultrasonore étant positionné de façon à pouvoir envoyer une onde ultrasonore vers ladite cavité (34),
(c) génération d'une onde ultrasonore incidente avec ledit transducteur ultrasonore, ladite onde se propageant à travers ledit capot (33) jusqu'à ladite cavité (34),
(d) réception avec ledit transducteur ultrasonore de l'onde ultrasonore renvoyée par ladite cavité (34) et enregistrement du signal ultrasonore correspondant,
(e) analyse dudit signal ultrasonore pour déterminer si ladite cavité (34) est remplie d'air ou d'eau, de façon à déterminer l'absence ou la présence d'eau dans l'espace annulaire (7) de ladite conduite flexible (1).

10. Procédé selon la revendication 9 **caractérisé en ce que** lors de l'étape (b) ledit transducteur est en contact direct avec la face externe dudit capot (33) au droit de ladite cavité (34).

11. Procédé selon la revendication 9 **caractérisé en ce que** lors de l'étape (b) ledit transducteur n'est pas en contact direct avec la face externe dudit capot (33), le couplage ultrasonore entre ledit transducteur et ledit capot (33) étant réalisé par l'eau de mer.

12. Procédé selon l'une quelconque des revendications 9 à 11 **caractérisé en ce que** lors de l'étape (c) l'onde ultrasonore incidente est une onde de compression qui se propage selon une direction radiale par rapport audit au moins un embout d'extrémité (3).

## Patentansprüche

1. Flexible Rohrleitung (1) für den Transport einer Erdölflüssigkeit in einer Unterwasserumgebung, umfassend einen flexiblen Rohrabschnitt (2) und zwei Endstücke (3), wobei jedes der beiden Enden des flexiblen Rohrabschnitts (2) mit einem der beiden Endstücken (3) verbunden ist, wobei der flexible Rohrabschnitt (2) von innen nach außen einen polymeren Innenmantel (4) zum Bilden eines Durchgangs für die Zirkulation der Flüssigkeit, mindestens eine Panzerschicht (5) und einen polymeren Außenmantel (6) umfasst, wobei der Innenmantel (4) und der Außenmantel (6) einen ringförmigen Raum (7) begrenzen, in dem die mindestens eine Panzerschicht (5) angeordnet ist, wobei jedes der beiden Endstücke (3) von innen nach außen eine Endwölbung (31), die abdichtend mit dem Innenmantel (4) zum Bilden eines Durchgangs für die Zirkulation der Erdölflüssigkeit verbunden ist, Verankerungsmittel (32) für die mindestens eine Panzerschicht (5) und eine Metallabdeckung (33) umfasst, wobei die Abdeckung (33) an der Endwölbung (31) befestigt und abdichtend mit dem Außenmantel (6) verbunden ist, **dadurch gekennzeichnet, dass** mindestens eines der beiden Endstücke (3) einen Hohlraum (34) umfasst, der sich an der Vorderseite der Verankerungsmittel (32) befindet und über Kommunikationsmittel (35) mit dem ringförmigen Raum (7) verbunden ist, wobei die Kommunikationsmittel (35) dazu ausgelegt sind, Wasser aus dem ringförmigen Raum (7) in Richtung des Hohlraums (34) zirkulieren zu lassen, wobei die Abdeckung (33) die Außenwand des Hohlraums (34) bildet, so dass es möglich ist, das Vorhandensein von Wasser in dem ringförmigen Raum (7) zu detektieren, indem der Hohlraum (34) mit einem Ultraschallwandler inspiziert wird, der außerhalb der Abdeckung (33) im Bereich des Hohlraums (34) angeordnet ist.

2. Flexible Rohrleitung nach Anspruch 1, **dadurch gekennzeichnet, dass** die Abdeckung (33) eine konstante Dicke im Bereich des Hohlraums (34) aufweist.

3. Flexible Rohrleitung nach Anspruch 2, **dadurch gekennzeichnet, dass** die Dicke der Abdeckung (33) im Bereich des Hohlraums (34) zwischen 10 mm und 60 mm beträgt.

4. Flexible Rohrleitung nach einem der Ansprüche 1 bis 3, **dadurch gekennzeichnet, dass** der Hohlraum (34) ein Volumen zwischen 0,1 und 10 Litern aufweist.

5. Flexible Rohrleitung nach einem der Ansprüche 1 bis 4, **dadurch gekennzeichnet, dass** die Endwölbung (31) die Innenwand des Hohlraums (34) bildet.

6. Flexible Rohrleitung nach einem der Ansprüche 1 bis 5, **dadurch gekennzeichnet, dass** der Hohlraum (34) achsensymmetrisch und koaxial in Bezug auf die Mittellängsachse des mindestens einen Endstücks (3) ist.

7. Flexible Rohrleitung nach Anspruch 6, **dadurch gekennzeichnet, dass** die Innen- und Außenflächen des Hohlraums (34) zylindrisch und koaxial sind.

8. Flexible Rohrleitung nach einem der Ansprüche 1 bis 7, **dadurch gekennzeichnet, dass** die Innen- und Außenflächen des Hohlraums (34) flach und parallel sind.

9. Verfahren zum Inspizieren einer flexiblen Rohrleitung (1) für den Transport einer Flüssigkeit in einer Unterwasserumgebung während des Gebrauchs, wobei das Verfahren die folgenden Schritte umfasst:
(a) Bereitstellen und Installieren einer flexiblen Rohrleitung (1) nach einem der Ansprüche 1 bis 8 in einer Unterwasserumgebung,
(b) Anbringen eines Ultraschallwandlers an oder in der Nähe der Außenfläche der Abdeckung (33) des mindestens einen Endstücks (3), das einen Hohlraum (34) umfasst, wobei der Ultraschallwandler derart platziert wird, dass er eine Ultraschallwelle in Richtung des Hohlraums (34) senden kann,
(c) Erzeugen einer einfallenden Ultraschallwelle mit dem Ultraschallwandler, wobei sich die Welle durch die Abdeckung (33) bis zum Hohlraum (34) ausbreitet,
(d) Empfangen der von dem Hohlraum (34) zurückgesendeten Ultraschallwelle mit dem Ultraschallwandler und Aufzeichnen des entsprechenden Ultraschallsignals,
(e) Analysieren des Ultraschallsignals, um zu bestimmen, ob der Hohlraum (34) mit Luft oder Wasser gefüllt ist, um so das Nichtvorhandensein oder das Vorhandensein von Wasser im ringförmigen Raum (7) der flexiblen Rohrleitung (1) zu bestimmen.

10. Verfahren nach Anspruch 9, **dadurch gekennzeichnet, dass** der Wandler bei Schritt (b) in direktem Kontakt mit der Außenfläche der Abdeckung (33) im Bereich des Hohlraums (34) steht.

11. Verfahren nach Anspruch 9, **dadurch gekennzeichnet, dass** der Wandler bei Schritt (b) nicht in direktem Kontakt mit der Außenfläche der Abdeckung (33) steht, wobei die Ultraschallkopplung zwischen dem Wandler und der Abdeckung (33) durch das Meerwasser hergestellt wird.

12. Verfahren nach einem der Ansprüche 9 bis 11, **dadurch gekennzeichnet, dass** die einfallende Ultraschallwelle bei Schritt (c) eine Kompressionswelle ist, die sich in Bezug auf das mindestens eine Endstück (3) in radialer Richtung ausbreitet.

## Claims

1. A flexible pipe (1) for transporting a petroleum fluid in an underwater environment, comprising a flexible tubular section (2) and two end fittings (3), each of the two ends of said flexible tubular section (2) being connected to one of said two end fittings (3), said flexible tubular section (2) comprising, from the inside to the outside, a polymeric internal sheath (4) for forming a passage for circulation of the fluid, at least one armor layer (5), and a polymeric external sheath (6), said internal sheath (4) and external sheath (6) delimiting an annular space (7) in which said at least one armor layer (5) is arranged, each of said two end fittings (3) comprising, from the inside to the outside, an end vault (31) connected in a sealed manner to said internal sheath (4) for forming a passage for circulation of the petroleum fluid, means (32) for anchoring said at least one armor layer (5), and a metal cap (33), said cap (33) being attached to said end vault (31) and being connected in a sealed manner to said external sheath (6),
**characterized in that** at least one of said two end fittings (3) has a cavity (34) located at the front of said anchoring means (32), and connected to said annular space (7) by communication means (35), said communication means (35) being able to circulate water from said annular space (7) toward said cavity (34), said cap (33) forming the outer wall of said cavity (34), in such a way that it is possible to detect the presence of water in said annular space (7) by inspecting said cavity (34) with an ultrasonic transducer disposed outside said cap (33) in line with said cavity (34).

2. The flexible pipe as claimed in claim 1, **characterized in that** said cap (33) has a constant thickness in line with said cavity (34).

3. The flexible pipe as claimed in claim 2, **characterized in that** the thickness of said cap (33) in line with said cavity (34) is between 10 mm and 60 mm.

4. The flexible pipe as claimed in any one of claims 1 to 3, **characterized in that** said cavity (34) has a volume of between 0.1 and 10 liters.

5. The flexible pipe as claimed in any one of claims 1 to 4, **characterized in that** said end vault (31) forms the internal wall of said cavity (34).

6. The flexible pipe as claimed in any one of claims 1 to 5, **characterized in that** said cavity (34) is axisymmetric and coaxial with respect to the central longitudinal axis of said at least one end fitting (3).

7. The flexible pipe as claimed in claim 6, **characterized in that** the internal and external faces of said cavity (34) are cylindrical and coaxial.

8. The flexible pipe as claimed in any one of claims 1 to 7, **characterized in that** the internal and external faces of said cavity (34) are flat and parallel.

9. A method for inspecting during use a flexible pipe (1) for transporting a fluid in an underwater environment, said method comprising the following steps:
(a) supplying and installing, in an underwater environment, a flexible pipe (1) as claimed in any one of claims 1 to 8,
(b) applying an ultrasonic transducer against or in the vicinity of the external face of the cap (33) of said at least one end fitting (3) having a cavity (34), said ultrasonic transducer being placed so as to be able to send an ultrasonic wave toward said cavity (34),
(c) generating an incident ultrasonic wave with said ultrasonic transducer, said wave propagating through said cap (33) to said cavity (34),
(d) receiving with said ultrasonic transducer the ultrasonic wave sent back by said cavity (34) and recording the corresponding ultrasonic signal,
(e) analyzing said ultrasonic signal to determine whether said cavity (34) is filled with air or water, so as to determine the absence or the presence of water in the annular space (7) of said flexible pipe (1).

10. The method as claimed in claim 9, **characterized in that** during step (b) said transducer is in direct contact with the external face of said cap (33) in line with said cavity (34).

11. The method as claimed in claim 9, **characterized in that** during step (b) said transducer is not in direct contact with the external face of said cap (33), the ultrasonic coupling between said transducer and said cap (33) being produced by the sea water.

12. The method as claimed in any one of claims 9 to 11, **characterized in that** during step (c) the incident ultrasonic wave is a compression wave which propagates in a radial direction with respect to said at least one end fitting (3).
